# EUROPEAN PATENT SPECIFICATION

(11) **EP 0 377 314 B1**
(45) Date of publication and mention of the grant of the patent: **01.06.1994**
(21) Application number: 89313536.8
(22) Date of filing: 22.12.1989
(51) Int. Cl.: H01B 13/32

(54) **A method for the longitudinal sealing of cables**
Verfahren zum Längsabdichten von Kabeln
Une méthode pour l'obturation longitudinale de câbles

(30) Priority: 24.12.1988 DE 3843932
(43) Date of publication of application: 11.07.1990
(73) Proprietor: MINNESOTA MINING AND MANUFACTURING COMPANY, St. Paul, Minnesota 55133-3427 (US)
(72) Inventor: Gunther, John, D-4040 Neuss 1 (DE); Friedrich, Jurgen D., D-4040 Neuss 1 (DE)
(74) Representative: Baillie, Iain Cameron

(56) References cited:
- EP-A- 0 182 530
- EP-A- 0 288 869
- FR-A- 2 505 082

## Description

The invention refers to a method for the longitudinal sealing of cables according to the preamble of patent claim 1.

The conductor of electrical cables which consists of more than one conductor wire includes necessarily interstices. The distribution of the interstices is depending on the manner in which the individual wires extend, i.e., whether they are stranded, braided or irregularly distributed. Owing to temperature and pressure changes, moisture can penetrate into the interstices. A plurality of methods is known for the longitudinal sealing of cables.

It is for example known to completely seal cable lengths and to fill up the interior of the cable lengths with a hydrophobic insulating liquid or gas under pressure. Normally, such method is applied only to highly qualified cables and not for general purposes, above all not for weak-current cables as are used for example in automobiles, electrical devices, in telecommuncation and other means to a large extent.

For the longitudinal insulation of electrical conductors, it is known to use specific masses which are filled in under different methods. From the German patent specification 26 26 103 it is known to use 1 to 10 parts of weight wax which is an ester or mixture of ester of aliphatic carbon acids and aliphatic alcohols with a melting point above 70°C, preferably 80 to 100°C. At ambient temperature, such masses are relatively viscous. Before filled in, the masses are heated to bring them in a sufficient fluid state so that the individual interstices can be filled up. Such a longitudinal sealing is not satisfactory for those cases where the electrical conductor is subjected to higher temperatures during operation, e.g., cables in the engine compartment of automobiles. At higher temperatures the fluid mass may exit to cable under leaving interstices.

The German patent specification 31 44 693 discloses an apparatus for the application of a hydrophobic substance to the conductor of a cable wherein a first filling head applies liquid or nearly liquid substance to the conductor and wherein a second filling head applies a paste to the conductor. The seriesly arranged filling heads are sealingly interconnected. The liquid filling substance is introduced under a large excess; it is partially substituted by the paste. Disregarding that it is relatively difficult to completely fill up all interstices by such a device and that the used substances have a temperature-depending viscosity, a further disadvantage results from the extrusion of a synthetic jacket on the conductor. With this method, the conductor is drawn through the extruder head to apply a plastic sheath of predetermined thickness. Such application or coating can be affected by a surplus of filling material. Such affects may even result in interruptions of the cable sheath. In case of multi-wired cable conductors, the excess of filling material cannot be completely removed before the extrusion process by stripping means in front of the extruder head. Finally, the extruder head may be blocked up by the filling material so that the operation has to be stopped from time to time for cleaning purposes.

Similar difficulties can be expected with a method according to the German patent specification 35 12 700 wherein a cable conductor is surrounded by a sealing collar including a filler chamber, into which the filling material is introduced under pressure. Since the filling chamber is frictionally engaging the cable conductor, it is automatically conveyed with the feeding of the cable. Such a method, however, is only suited for relatively small feed velocities. In the manufacturing of weak-current cables, e.g., for automobiles, production speeds of 600 to 1200 m per minute are accomplished. With the known apparaturs, such production rates are not possible at all. By the way, the known method uses a filling substance which at high temperatures has a low viscosity.

From the German patent specification 25 28 726, it is known to fill a curable adhesive cement into the interstices of braided strands consisting of individual or twisted wires, preferably by feeding the braided strands through a splashing or a spraying bath. The use of such an adhesive cement, e.g., a varnish dissociating and evaporating at soldering temperature is to prevent the broom-like spreading of the wires if the insulation is removed. The adhesive cement used with the known methods includes solvents which evaporate above all at higher temperatures. Due to the contents of hydrocarbons, they are inflammable. Further, the same difficulties exist with respect to the subsequent extrusion process. Besides, it should encounter difficulties to apply the adhesive cement such that the complete volume is filled up. In order to penetrate all interstices, the adhesive cement has to have sufficient low viscosity. Good properties as to the wettability and flow capability result in the adhesive cement dropping from the braided strand as soon as it leaves the bath.

EP-A-0 182 530 discloses a water blocking thixotropic hydrophobic compound for cables which comprises a synthetic oil or a mixture of synthetic and mineral oils thickened to a gel by the addition of silica or bentonite. The gel properties of the compound may be temporarily removed by mechanical shearing to allow filling of a cable. An apparatus for cable filling is also described which includes a pressure chamber through which the cable is fed and into which the hydrophobic compound is supplied under pressure.

It is the object of the invention to suggest a method for the longitudinal sealing of cables which does not affect the coating of a cable sheath by means of an extruder at high production rates and which secures a longitudinal sealing substantially independent of the ambient temperature.

This object is attained by the features of the characterizing portion of claim 1.

With the method according to the invention, a sealing mass is used which includes a liquid capable to be gelled. An organic technical gelling means is added to the liquid.

It is known from the U.S. patent specifications 3,539,311 and 3,539,310 to transfer hydrophobic organic liquids, e.g., filling means in cable connections, electrical transformators or the like into a gel by a technical gelling means. Gelling means of such a kind include for example organic aluminum compounds, particularly poly oxo aluminum compounds which react with hydroxyl or carboxyl groups to a thixotropic gel. Since hydrophobic organic liquids, particularly mineral oil which are frequently used with electrical applications only include a small amount of hydroxyl or carboxyl groups, they cannot react with the mentioned gelling means to the desired extent. From the mentioned references it has become known to additionally add a reaction partner which includes the groups necessary for the gelling reaction. A carbon acid can for example be used as reaction partner. With this method, the mixture consisting of hydrophobic organic liquid, gelling agent and reaction partner is contained in an enclosure enveloping the cable connection to prevent it from flowing away as long as is not gelled up to a relatively stiff mass, i.e., having no more flow capability. This method cannot be applied to the longitudinal sealing of cables during their production just because the low production rate. Further, it is nearly impossible to supply the just desired amount to the cable. In case of a surplus adhering to the cable, the extrusion process is affected as already mentioned.

It has been recognized with the invention that nevertheless a gel is particularly suited to longitudinally seal the conductor of a cable. It is essential to the invention that the concentration of the gelling agent and/or the composition are selected such that a solidification of the liquid occurs slowly and not before half an hour. On the other hand more, it is prerequisite that the liquid during its application to the interstices is in a weakly thixotropic state, i.e., has to have a certain initial thixotropy. Finally, it is essential to the invention that during the application the said substance has a remarkable relative velocity with respect to the cable, whereby considerable shear forces effect on the substance to temporarily improve the flow capability. (This is dealt with in more detail more below.)
In case of electric applications, e.g., cable connections, it is intended to obtain a gelling time as short as possible. According to the German patent specification 35 23 473, this is for example achieved in that the gelling agent is prepared as solid substance by the reaction of poly oxo aluminum salts with a reaction partner in the form of an organic acid substituted by lower hydrocarbon residues. Such a solid gelling agent results in the desired gelling within a few minutes. Such a gelling agent, however, is not suited for the method according to the invention. The rapid reaction time prevents a complete filling up of the interstices. Further, the prevailing solid particles would lead to an obstruction for the extruder head. In order to completely fill up the interstices by a method according to the invention, the liquid added containing the gelling agent is in a sufficient fluid state in the interface adjacent the cable. Moreover, a slowly reacting gelling agent is used which becomes consistent after a certain time, the reaction time until the complete gelling takes place to several days. To this purpose, the reaction partner and the gelling agent are for example separately added to the liquid capable to be gelled, preferably in a liquid state and preferably in a stoichiometric relation which as has been described in the mentioned German patent specification 35 23 473 leads to a relatively slow reaction.

On the other side, the used mass has to have a certain initial viscosity and thixotropic properties. As a matter of fact, the viscosity of a thixotropic substance depends on the effective shear forces. Tests have shown that a nearly complete filling up of the interstices is achieved with a weakly thixotropic liquid having relatively poor flowing and wetting capabilities, which would not expect to sufficiently fill up the interstices. The cause is presumed in the fact that during the application process the prevailing shearing forces of the liquid adjacent the conductor result in a significant reduction of the viscosity and thus in a higher wettability. According to an embodiment of the invention, this is the case if the cable conductor is fed under a certain velocity through a bath filled with the liquid according to the invention prior to the extrusion of the cable sheath. Relatively thin cables are coated with a plastic sheath under several hundred meters per minute. If shear forces effect which correspond to a travelling speed in a bath of about 50 - 300 m/min, the viscosity is in the range of 100 - 1000 mPa· s. In one case of practical application, 350 - 500 mPa· s have been measured at a speed of about 40 m/min. From experience, this value increases by a factor of 10 - 100, i.e., at least by a power of ten for example to 5000 - 20,000 mPa· s in the state of rest. To mention a further example, this is also the case if the liquid is sprayed onto the conductor. At that moment when the conductor leaves the bath or the spraying process is finished, respectively, the shearing forces are no more effective and the initial viscousness or consistency returns which prevents the liquid from dropping out before the cable sheath is extruded on the conductor.

By adjusting the liquid to be applied with a given gelling agent to a predetermined concentration, a satisfactory filling up of the interstices in the cable conductor can be achieved. Due to the specific thixotropic behavior described, a stripping off of the excessive material from the circumference of the conductor can be carried out without problems.

The conductor and thus the filled-up liquid are necessarily heated within the extruder, the heat stored in the cable sheath having an effect also after the extrusion process. This temporarily results in an amplified gelling reaction which prevents that the liquid flows out of the cable during the winding up or collects in the lower portion of the cable roll due to gravity forces. The gelling process is not at all finished after the extrusion, rather can extend over several days. However, between the production of a cable and its application, normally some days pass so that a longer time duration for the completion of the gelling process can be accepted.

As already mentioned, the initial flow capability of the substance has to be relatively bad to prevent a dripping from the cable as soon as the shearing forces have terminated. The consistency of the substance evidently is limited in that prevailing production velocities on shear forces do not effect a satisfactory liquifying in the interface between the substance and the cable. It is understood that the initial thixotropy can be distinct so much the more the prevailing shear forces are larger and vice versa.

The method according to the invention can be carried out with a gelling agent comprising a poly oxo aluminum salt and an organic reaction partner including hydroxyl or carboxyl groups which have the above mentioned properties, particularly a sufficient wettability, a slow reaction time and a thixotropic behavior. It is understood that the reaction can be controlled by a temperature regulation, e.g., of the bath by heating or cooling it. If applied to electrical cables, it is further mandatory than the liquid to be gelled or the gel formed have the desired insulating and hydrophobic properties.

The used substance comprises a hydrophobic organic liquid with said gelling agent. According to a further embodiment of the invention, the reaction partner is preferably an organic acid substituted by low hydrocarbon residues, preferably an alkane acid. According to a further embodiment of the invention, the gelling agent is a poly oxo aluminum stearate having the formula 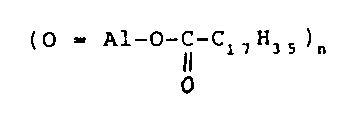
and 2-ethylhexan acid having the formula 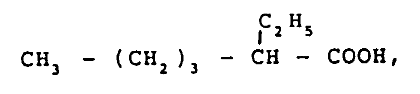
which are added under a stoichiometric proportion. According to a further embodiment of the invention, the liquid to be gelled can be an olefin, preferably a mineral oil.

The method according to the invention practically can be applied to all electrical cables, independent of whether the cables are built up by one conductor wire or a plurality of wires. If a plurality of wires is used, the transverse conductivity is not affected. It is of particular advantage to apply the invention to low-voltage cables.

The method according to the invention can be also applied to light conductors wherein problems are to be observed by the penetration of moisture leading to undesired reactions. The method according to the invention leads to a satisfactory longitudinal sealing of a cable. The flexible properties of a cable if required are not affected. Also, the connection of the cable conductor with a terminal, e.g., by a crimping process, meets no problems. The gel is squeezed out by the crimping forces. The realization of the method according to the invention is most simple and can be integrated in conventional manufacturing processes.

Examples for a gelling agent or a bath containing the gelling agent, respectively, for the filling up of interstices in cable conductors according to the method according to the invention will be given herebelow.

| Part A in weight percent | |
|---|---|
| Gravex oil 925 | 77,3 |
| Manalox EP 9066 | 22,7 |
| | 1̅0̅0̅,̅0̅ |

| Part B in weight percent | |
|---|---|
| Gravex oil 925 | 89,4 |
| 2-Ethylhexanacid | 10,6 |
| | 1̅0̅0̅,̅0̅ |

Mixing proportion part A : part B = 100 : 91. Gravex oil 925 is a naphten basic mineral oil of the Deutsche Shell; Manalox 9066 is a poly oxo aluminum stearate of Messrs. Manchem Ltd.

The process of the invention has been practiced with a substance indicated above at the following data:

| | | |
|---|---|---|
| Number of conductor wires | 20 | 30 |
| Diameter of the conductor wires | 0,25 mm | 0,25 mm |
| Cross section area of the conductor | 1 mm² | 1,5 mm² |
| Outer diameter of the cable | 2 mm | 2,5 mm |
| Extrusion speed | 50 m/min | 300 m/min |

Testing the longitudinal water leakage: A water column of 1000 mm was effecting on a cable of 500 mm length during 24 hours. No water exited from the cable.

## Claims

1. A method for the longitudinal sealing of cables wherein a gel composition containing a hydrophobic organic liquid and a gelling agent therefor, is applied to the cable conductor prior to the extrusion of an insulative coating of synthetic material onto said cable, characterized in that
a) said gelling agent comprises a poly oxo aluminum salt and an organic coreactant having hydroxyl or carboxyl groups,
b) said poly oxo aluminum salt and said coreactant being separately added to said hydrophobic liquid,
c) said composition being applied in its initial gelling phase to said conductor at a speed relative to said cable of 50 m/min to 300 m/min such that shear forces are present, said composition having a viscosity under said shear forces of 100 to 1000 mPa whereby said composition substantially wets said cable and fills any interstices therein,
d) said composition having a viscosity of 5000 to 20,000 mPa after said shear forces are removed, said composition thereby having an improved adherence to said cable, and
e) said composition requiring at least 30 minutes to become consistent.

2. The method according to claim 1, wherein the conductor is fed through a bath of the gel composition.

3. The method according to claims 1 or 2, wherein the coreactant is an organic acid substituted with low hydrocarbon residues, preferably an alkane acid.

4. The method according to any one of the claims 1 to 3, wherein a poly oxo aluminum stearate with the formula 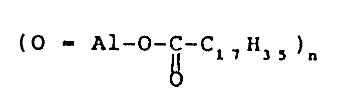 and 2-ethylhexane acid of the formula 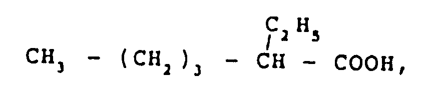 is used in a stoichiometric proportion.

5. The method according to any one of the preceding claims, wherein the hydrophobic organic liquid is an olefin, preferably a mineral oil.

6. The method according to any one of the preceding claims, characterized by its application to low-voltage cables.

7. The method according to any one of the preceding claims, characterized by the application to light conductors.

## Patentansprüche

1. Verfahren zum Längsabdichten von Kabeln, in dem eine eine hydrophobe organische Flüssigkeit und ein Geliermittel dafür enthaltende Gelzusammensetzung auf den Kabelleiter aufgetragen wird, bevor ein isolierender Überzug aus Kunststoff auf das Kabel extrudiert wird, dadurch gekennzeichnet, daß
a) das Geliermittel ein Polyoxoaluminiumsalz und einen organischen Reaktionspartner mit Hydroxyl- oder Carboxylgruppen aufweist,
b) das Polyoxoaluminiumsalz und der Reaktionspartner der hydrophoben Flüssigkeit getrennt voneinander zugesetzt werden,
c) die Zusammensetzung auf den Leiter in ihrer ursprünglichen Gelierphase mit einer Geschwindigkeit von 50 m/min bis 300 m/min relativ zu dem Kabel derart aufgetragen wird, daß Scherkräfte wirksam sind, wobei die Zusammensetzung unter der Einwirkung der genannten Scherkräfte eine Viskosität von 100 bis 1000 mPa hat, so daß die Zusammensetzung das Kabel im wesentlichen benetzt und etwa darin vorhandene freie Räume ausfüllt,
d) die Zusammensetzung nach dem Wegnehmen der Scherkräfte eine Viskosität von 5000 bis 20 000 mPa hat und daher fester an dem Kabel haftet und
e) die Zusammensetzung erst nach mindestens 30 min konsistent wird.

2. Verfahren nach Anspruch 1, in dem der Leiter durch ein aus der Gelzusammensetzung bestehendes Bad geführt wird.

3. Verfahren nach Anspruch 1 oder 2, in dem der Reaktionspartner eine mit niederen Kohlenwasserstoffresten substituierte organische Säure, vorzugsweise eine Alkansäure, ist.

4. Verfahren nach einem der Ansprüche 1 bis 3, in dem ein Polyoxoaluminiumstearat der Formel 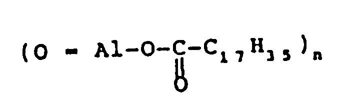 und eine 2-Ethylhexansäure der Formel 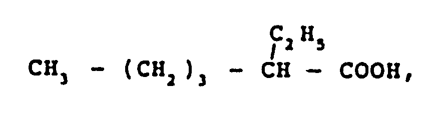 im stöchiometrischen Verhältnis verwendet werden.

5. Verfahren nach einem der vorhergehenden Ansprüche, in dem die hydrophobe organische Flüssigkeit ein Olefin, vorzugsweise ein Mineralöl, ist.

6. Verfahren nach einem der vorhergehenden Ansprüche, gekennzeichnet durch seine Anwendung auf Niederspannungskabel.

7. Verfahren nach einem der vorhergehenden Ansprüche, gekennzeichnet durch die Anwendung auf Lichtleiter.

## Revendications

1. Méthode pour l'obturation longitudinale de câbles, dans laquelle une composition de gel contenant un liquide organique hydrophobe et un agent de gélification de ce dernier est appliquée au conducteur du câble avant l'extrusion d'un revêtement isolant de matière synthétique sur ledit câble,caractérisée en ce que :
(a) ledit agent de gélification comprend un sel de poly oxo aluminium et un co-réactif organique ayant des groupes hydroxyle ou carboxyle,
(b) ledit sel de poly oxo aluminium et ledit co-réactif sont ajoutés séparément audit liquide hydrophobe,
(c) ladite composition est appliquée dans sa phase de gélification initiale audit conducteur à une vitesse de 50 m/min à 300 m/min par rapport audit câble de sorte que des forces de cisaillement existent, ladite composition ayant une viscosité de 100 à 1000 mPa sous les dites forces de cisaillement de sorte que ladite composition mouille substantiellement ledit câble et remplit les interstices à l'intérieur de celui-ci,
(d) ladite composition a une viscosité de 5 000 à 20 000 mPa après disparition desdites forces de cisaillement, ladite composition ayant ainsi une meilleure adhérence audit câble, et
(e) ladite composition nécessite au moins 30 minutes pour devenir consistante.

2. Méthode suivant la revendication 1, dans laquelle on fait avancer le conducteur à travers un bain de la composition de gel.

3. Méthode suivant la revendication 1 ou 2, dans laquelle le co-réactif est un acide organique substitué avec des résidus d'hydrocarbures inférieurs, de préférence un acide d'alcane.

4. Méthode suivant une quelconque des revendications 1 à 3, dans laquelle un poly oxo aluminium stéarate ayant la formule 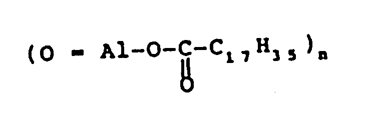 et un acide de 2-éthylhexane ayant la formule : 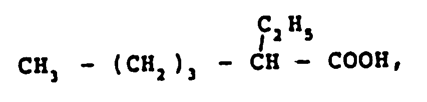 sont utilisés dans une proportion stoechiométrique.

5. Méthode suivant une quelconque des revendications précédentes, dans laquelle le liquide organique hydrophobe est une oléfine, de préférence une huile minérale.

6. Méthode suivant une quelconque des revendications précédentes, caractérisée par son application à des câbles basse tension.

7. Méthode suivant une quelconque des revendications précédentes, caractérisée par son application à des conducteurs de lumière.
